# EUROPÄISCHE PATENTSCHRIFT

(11) **EP 1 332 799 B1**
(45) Veröffentlichungstag und Bekanntmachung des Hinweises auf die Patenterteilung: **22.03.2006**
(21) Anmeldenummer: 03001736.2
(22) Anmeldetag: 27.01.2003
(51) Int. Cl.: B05B 12/08, G05D 1/03, C23C 4/12

(54) **Vorrichtung und Verfahren zum thermischen Spritzen**
Thermal coating device and process
Dispositif et méthode de revêtement thermique

(30) Priorität: 31.01.2002 DE 10203884
(43) Veröffentlichungstag der Anmeldung: 06.08.2003
(73) Patentinhaber: MTU Aero Engines GmbH, 80995 München (DE)
(72) Erfinder: Schutte, Karsten, Dr.-Ing., 92224 Amberg (DE)

(56) Entgegenhaltungen:
- EP-A- 0 484 533
- EP-A- 0 911 425
- EP-A- 0 955 389
- DE-A- 19 857 737
- US-A- 3 521 959
- US-A- 5 294 798
- US-A- 5 322 706
- GRANT P S ET AL: "The monitoring of deposit surface temperatures during spray-forming by infrared thermal-imaging" SCRIPTA METALLURGICA, ELSEVIER SCIENCE LTD., KIDLINGTON, GB, Bd. 23, Nr. 10, 1989, Seiten 1651-1656, XP002112983 ISSN: 0036-9748

## Beschreibung

Die vorliegende Erfindung betrifft eine Spritzvorrichtung zum Erzeugen einer Beschichtung auf einer Oberfläche gemäß dem Oberbegriff des Patentanspruchs 1 und ein Verfahren zum thermischen Spritzen nach Patentanspruch 7.

Das thermische Spritzen gehört gemäß DIN 8580 sowohl zu der Gruppe der Urformals auch der Beschichtungsverfahren. Es sind dabei nach EN 657 jene Verfahren umfasst, bei denen Spritzzusätze innerhalb oder außerhalb von Spritzgeräten an-, auf-oder abgeschmolzen und auf Oberflächen von Werkstücken aufgeschleudert werden. Die Oberflächen werden hierbei nicht aufgeschmolzen. Als wesentliche Vorteile des thermischen Spritzenverfahrens sind zu nennen, daß sich nahezu jedes Material beschichten und verspritzen lässt , daß das zu beschichtende Material (Substrat) nicht thermisch verändert wird, daß jede Bauteilgröße und Geometrie beschichtet werden kann, daß die Verfahren gut automatisierbar und flexibel sind und, daß sich durch geeignete Kombination von Materialeigenschaften der Spritzzusätze eine auf das jeweilige Beanspruchungsprofil zugeschnittene Spritzschicht erzeugen lässt.

Unter dem Begriff "Thermisches Spritzen" sind unterschiedliche Spritzverfahren zusammengefasst. Sie werden entsprechend EN 657 unterteilt nach der Art des Spritzzusatzwerkstoffes, der Fertigung oder des Energieträgers. Alle thermischen Spritzverfahren benutzen zur Erzeugung von Spritzschichten zwei Energiearten, die thermische und die kinetische Energie. Diese Energieträger sind entweder eine Brenngas-Sauerstoff-Flamme, ein elektrischer Lichtbogen, ein Plasmastrahl oder auch ein Laserstrahl. Die thermische Energie wird benötigt, um den Spritzzusatz an-oder aufzuschmelzen. Die kinetische Energie, gekoppelt an die Partikelgeschwindigkeit, dient der Beeinflussung der Schichtdicke, der Haftzugfestigkeit der Spritzschicht in sich und der Haftzugfestigkeit der Schicht zum Grundwerkstoff. Die kinetische Energie variiert sehr stark, abhängig vom eingesetzten Verfahren des thermischen Spritzens, und ist zudem vom Spritzmaterial und der Partikelgröße des Spritzzusatzes abhängig.

Als bekannte Varianten des thermischen Spritzens sind gemäß EN 657 das Flammspritzverfahren (Draht- oder Stabflammspritzen, Pulverflammspritzen, Kunststoff-Flammspritzen, Hochgeschwindigkeits-Flammspritzen, Detonationsspritzen (Flammschockspritzen)), das Plasmaspritzen, das Lichtbogenspritzen und das Laserspritzen bekannt. Als Sonderverfahren ist zudem das sogenannte Kaltgasspritzen, welches in den DE 197 47 386 A1 und EP 0484 533 B1 näher beschrieben ist, zu nennen.

Die Einsatzgebiete und Anwendungen des thermischen Spritzens sind sehr vielfältig und reichen von Dekorationsschichten für Haushalts- und Küchengeräte über Notlauf-/Verschleißschutzschichten der Automobiltechnik bis hin zu Hochtemperaturschutzschichten in der Luft- und Raumfahrtechnik. Für spezielle Anwendungsfälle und Einsatzgebiete sind zudem spezielle vorteilhafte Ausführungsformen und Zusatzaggregate entwickelt worden.

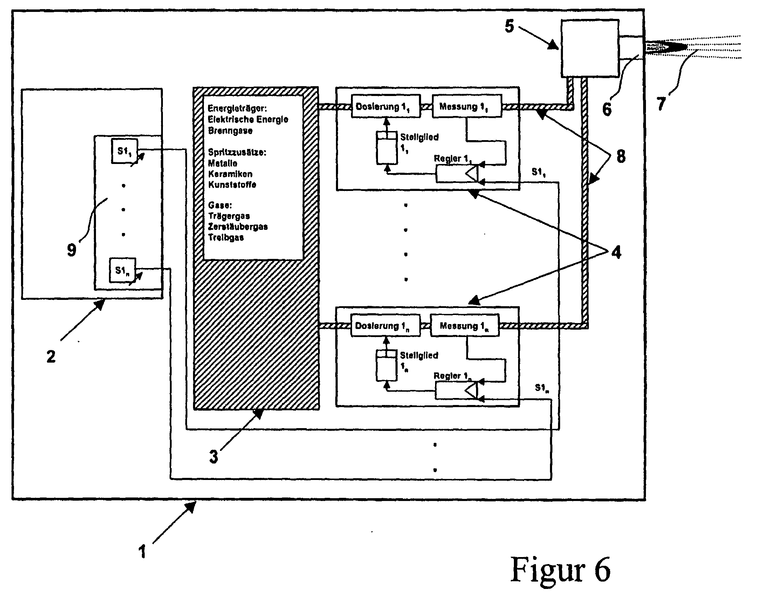

Aufgrund der Vielzahl an Verfahren des thermischen Spritzen und der Notwendigkeit, die gleichbleibenden Qualität der erzeugten Spritzschichten sicherzustellen, beschreibt und regelt die EN 1359 diesbezüglich einheitliche Bedingungen zur Qualitätssicherung und zur Abnahme/Prüfung von Spritzanlagen. In Figur 6 ist eine thermische Spritzanlage 1 gemäß EN 1395 gezeigt. In der Spritzanlagensteuerung 2 erfolgt dabei typischerweise mit Hilfe eines internen Vorgabe-Moduls 9 die Vorgabe einer oder mehrerer Sollwerte für die zu überwachenden Parameter. Die vom Vorgabe-Modul 9 zur Verfügung gestellten Sollwerte werden im folgenden als S1 ₁, S1 ₂, ...., S1 ₙ bezeichnet, wobei n = 1,2, ... die Anzahl der zu überwachenden Parameter wiedergibt. Im allgemeinen wird angestrebt, die Spritzparameter in einem Toleranzbereich von ca. ± 5 % des vorgegebenen Sollwertes langfristig konstant zu halten. Die Energieträger (beispielsweise elektrische Energie und/oder Brenngase), Spritzzusätze (beispielsweise Metalle, Keramiken oder Kunststoffe) und Gase (beispielsweise Trägergas, Zerstäubergas und/oder Treibgas) werden aus dem Vorrat 3 über geeignete Zuführungen 8 und Regeleinheiten 4 der Spritzpistole 5 zugeführt. Die vom Vorgabe-Modul 9 den Regeleinheiten 4 zur Verfügung gestellten Sollwerte gestatten es, zumindest die in der EN 1395 beschriebenen Toleranzwerte für die einzelnen Spritzparameter zu überwachen. Der Spritzstrahl 7 tritt über die in die Spritzpistole 5 integrierte Spritzdüse 6 aus und steht zur Beschichtung des Bauteils zur Verfügung. Die in der EN 1359 geregelten Abnahmeprüfungen für Spritzanlagen stellen nur die verbindlichen Mindestanforderungen an die Spritzanlage selbst dar. Ziel eines technisch und wirtschaftlich optimierten Spritzprozesses (Spritzverfahren und Spritzvorrichtung) muß es jedoch sein, neben der Schichtqualität eine höchstmögliche Reproduzierbarkeit bei geringstem Ausschuss und Materialeinsatz bei gleichzeitig erhöhter Leistungsfähigkeit/Fertigungskapazität der Spritzanlage bereitzustellen.

Bisher erfolgt eine Erfassung, Kontrolle und/oder Überwachung der Einflussparameter beim thermischen Spritzen gemäß den in der EN 1359 vorgegebenen Toleranzgrenzen. Dies soll die Reproduzierbarkeit und Qualität der Schichten gewährleisten. Dabei werden ausgewählte, relevante Prozessparameter gemessen, geregelt und gegebenenfalls auch dokumentiert. Relevante Prozessparameter sind beispielsweise die Gasflüsse (Trägergas und/oder gegebenenfalls Brenngas), die Stromstärken, der Spritzabstand, der Spritzwinkel (Winkel zwischen Spritzstrahl und Substratoberfläche), die Relativgeschwindigkeit des Spritzstrahls zur Substratoberfläche, die Einbringung des Zusatzwerkstoffes, die Menge des Spritzpulvers bzw. die Drahtvorschubgeschwindigkeiten etc.. Die folgende Tabelle 1 gibt die Haupteinflussparameter exemplarisch beim Plasmaspritzen wieder und verdeutlicht die Vielschichtigkeit sowie die daraus resultierende Defizite einer industrietauglichen, reproduzierbaren Regelung mit Toleranzwerten gemäß EN 1395.

**Tabelle 1. Haupteinflussparameter beim Plasmaspritzen.**

| **Spritzbedingungen** |
|---|
| Spritzabstand |
| Relative Geschwindigkeit der Plasmakanone |
| Umgebungsmedium |
| Substratkühlung |

| **Pulverförderung** |
|---|
| Art und Flussrate des Fördergases |
| Förderrate des Pulvers |
| Ort der Pulverinjektion |
| Pulverinjektionsgeschwindigkeit |

| **Energieträger** |
|---|
| Spannung |
| Stromstärke |
| Flußrate des Plasmagases |
| Elektrodenform der Plasmakanone |

| **Spritzpulver** |
|---|
| Pulvergröße |
| Pulverform |
| Partikelgrößenverteilung |
| Physikalische Eigenschaften |
| Chemische Eigenschaften |

| **Substrateigenschaften** |
|---|
| Substrattemperatur |
| Oberflächenrauhigkeit |
| Physikalische Eigenschaften |
| Chemische Eigenschaften |

US 5,322,706 offenbart ein Verfahren und eine Vorrichtung zur Überwachung von Parametern eines Beschichtungssystems für hochviskoses Material, wobei dieses in einem endlosen fließfähigen Strom bzw. einer endlosen Faser auf dem Substrat abgelegt wird. Die Faser erstreckt sich während des Beschichtens in Form eines dreidimensionalen Spiralmusters von einer Verteilerdüse auf das Substrat. Die Kontrolle der Bewegung bzw. die Veränderung der Bewegung des dreidimensionalen Spiralmusters erfolgt dabei vorzugsweise durch Schallmessung, kann aber auch durch Licht erfolgen.

Aus DE 198 57 737 A1 geht ein Werkstoff zum Herstellen einer korrosions- und verschleißfesten Schicht sowie ein Verfahren zum Herstellen dieser Schicht als bekannt hervor. Dieses Verfahren wird durch ein Online-Kontroll- und Steuersystem überwacht.

Die DE 198 20 195 A1 offenbart ein Verfahren zur Erzeugung einer Spritzschicht auf der Oberfläche eines Substrates, wobei ein gegebenenfalls an- oder aufgeschmolzener Zusatzwerkstoff unter Einsatz eines Gases oder Gasgemisches auf die zu beschichtende Oberfläche eines Substrates geleitet wird. Ferner wird eine zugehörige Anlage zur Erzeugung der Spritzschicht mittels eines thermischen Spritzverfahrens beschrieben, wobei die Anlage Mittel zum Zuführen des Zusatzwerkstoffes und des Gases oder Gasgemisches umfasst. Gemäß der DE 198 20 195 A1 wird mittels einer digitalen Kamera zumindest ein die Qualität der Spritzschicht beeinflussendes Merkmal des thermischen Spritzprozesses erfasst, kontrolliert und/oder überwacht. Als Digitalkamera kommen dabei sowohl digitale Bildkameras als auch digitale Videokameras zur Anwendung. Bei dem in der DE 198 20 195 A1 beschriebenen Verfahren handelt es sich um ein so genanntes Particle-Flux-Imaging (PFI) Verfahren. Dieses erlaubt eine in-situ Diagnostik von Plasmaspritzvorgängen auf Basis einer digitalen Hochgeschwindigkeitskamera. Dabei erfolgt eine willkürliche Separation des Partikel- und Gasanteils im Spritzstrahl und nachfolgend eine digitale Bildverarbeitung. Aufgrund des hohen erforderlichen Justage-Aufwands und der beweglichen mechanischen Komponenten, ist das Verfahren für industrielle Anwendungen nicht geeignet.

Ferner sind aus dem Stand der Technik Verfahren zur spektralen Emissionsanalyse bekannt, welche es gestatteten, die Temperatur der Partikel und der Gase zu bestimmen. Hierbei muss die Temperatur ausreichend hoch sein, um zumindest emittierende Neutrale zu bilden. Da in der Flamme sowohl Bereiche mit lokalem thermischem Gleichgewicht als auch Nichtgleichgewichtsbereiche auftreten, können vor allem Randberciche aufgrund hoher Temperaturgradienten zu Fehlern führen. Die notwendige Entabelung der aufgezeichneten Spektrallinieninteneitäten aufgrund der seitlichen Betrachtung der Flamme schränkt das Verfahren ein. Die spektrale Intensität, die aus zeitlich gemittelten Messungen hervorgeht, kann, da die Beziehungen nicht linear sind, nicht direkt in einem Temperaturwert umgesetzt werden. Zur quantitativen Erfassung der Temperatur sind zudem Messgeräte erforderlich mit hohen Investitionskosten und für eine industrielle Anwendung unvertretbarem Justage-, Wartungs- und apparativem Aufwand. Die zeitaufgelöste Aufzeichnung von charakteristischen Spektrallinienintensitäten kann jedoch genutzt werden, um zumindest qualitative Aussagen zum Verlauf von thermischen Spritzprozessen zu machen. Zudem sind qualitative Zusammenhänge zwischen den erfassten Spektrallinienintensitäten und systematisch geänderten Parametern darstellbar. Dieses Verfahren ist näher in
- Praktische Erfahrungen beim Einsatz eines Spektrometer-Messsystems zur Prozessüberwachung und-Optimierung beim Thermischen Spritzen, Aumüller, B. u. A. Lang und K. Dotzler und K. Schutte, Proceedings of the UTSC 1999, Düsseldorf, DVS-Berichte (1999), S. 747-749
beschrieben, deren Inhalt durch Bezugnahme in diese Anmeldung aufgenommen werden soll. Dieses Verfahren und System eignet sich lediglich zur Prozessanalyse und/oder-überwachung. Eine online Prozessregelung des thermischen Spritzprozesses ist nicht möglich.

Der vorliegenden Erfindung liegt daher die Aufgabe zugrunde, ein verbessertes Verfahren und eine verbesserte Vorrichtung zur Verfügung zu stellen, bei dem bzw. bei der neben hoher Schichtqualität eine hohe Reproduzierbarkeit bei geringem Ausschuss und Materialeinsatz gegeben ist. Dabei soll eine Qualitätskontrolle der erzeugten Spritzschichten während des laufenden Spritzprozesses möglich sein. Ferner soll zumindest die Überwachung von Änderungen der Energieträgerzufuhr und der Zuführung der Spritzzusatzwerkstoffe sichergestellt werden. Die erfindungsgemäße Lösung soll auch auf signifikante Änderungen der Partikeleigenschaften zuverlässig reagieren und im rauen, industriellen Umfeld einsetzbar sein.

Diese Aufgabe wird erfindungsgemäß durch eine Spritzvorrichtung mit den Merkmalen des Patentanspruchs 1 und ein Verfahren zum thermischen Spritzen mit den Merkmalen des Patentanspruchs 10 gelöst. Vorteilhafte Ausgestaltungen und Weiterbildungen der Erfindung werden in den Unteransprüchen beschrieben.

Durch die vorliegende Erfindung werden die Nachteile des Standes der Technik überwunden. Insbesondere wird ein verbessertes Verfahren und eine verbesserte Vorrichtung zur Verfügung gestellt, bei dem bzw. bei der neben hoher Schichtqualität eine hohe Reproduzierbarkeit des Spritzvorgangs bei geringem Ausschuß und Materialeinsatz gegeben ist. Dabei ist eine Qualitätskontrolle der erzeugten Spritzschichten während des laufenden Spritzprozesses möglich. Ferner ist die Überwachung von Änderungen der Energieträgerzufuhr und der Zuführung der Spritzzusatzwerkstoffe möglich. Die erfindungsgemäße Lösung kann auch auf signifikante Änderungen der Partikeleigenschaften zuverlässig reagieren und ist im rauhen, industriellen Umfeld einsetzbar.

Die erfindungsgemäße Aufgabe wird hinsichtlich des Verfahrens dadurch gelöst, daß mittels einer optischen Spektroskopieanordnung zumindest ein die Qualität der Spritzschicht beeinflussendes Merkmal des thermischen Spritzprozesses erfasst, kontrolliert, überwacht und/oder der Spritzprozess online geregelt wird. In der Spritzvorrichtung ist entsprechend eine optische Spektroskopieanordnung zur Erfassung, Kontrolle, Überwachung und/oder Regelung zumindest eines die Qualität der Spritzschicht beeinflussenden Merkmals des thermischen Spritzprozesses vorgesehen.

Die Qualität der Spritzschicht beeinflussende Merkmale des thermischen Spritzprozesses sind dem Fachmann und/oder Anwendern von thermischen Spritzverfahren bekannt. Dies können entweder Parameter des Spritzprozesses selbst und/oder mit einem oder mehreren Parametern korrespondierende und/oder daraus abgeleiteter Größen und/oder relative Verhältnisse derselben sein. Beispielsweise sind dies:
- die Einbringung des Spritzzusatzes in die Brenngas-Sauerstoff-Flamme beim Flammspritzen oder in das Plasma beim Plasmaspritzen
- die Charakteristik des Spritzstrahls (Intensitätsverteilung, Gesamtintensität, geometrische Form, Größe, etc.).

Die erfindungsgemäß ausgestaltete Diagnostik durch Erfassung, Kontrolle, Überwachung und/oder Regelung von die Qualität der Spritzschicht beeinflussenden Merkmalen des thermischen Spritzprozesses führt zu einer vom apparativen und technisch-wirtschaftlichen Aufwand her einfachen aber äußerst effizienten und flexiblen Qualitätssicherung für das thermische Spritzen.

Beispielsweise kann in Industriebetrieben und Forschungseinrichtungen, welche das thermische Spritzen einsetzen, bei gleichzeitigem Einsatz verschiedener Spritzverfahren und auch bei häufig wechselnden Spritzanwendungen und/oder Verwendung unterschiedlicher Spritzzusätze, die Reproduzierbarkeit und Qualität der Spritzschichten anhand einer Bewertung von qualitätsprägenden Merkmalen bzw. von Parametern und/oder Größen des Spritzprozesses und/oder der relativen Verhältnisse derselben über einen oder mehrere aufgezeichnete Standards (beispielsweise Sollwert des Gesamtintensitätsintegrals und/oder Sollwerte der charakteristischen Energieträger- und/oder Spritzzusatz-Linienintensitäten) durch die erfindungsgemäß ausgestaltete Spritzvorrichtung sehr schnell effizient und langfristig gewährleistet werden. Dadurch weisen alle erzeugten Spritzschichten eine gleichbleibende und definierte Qualität auf.

Des weiteren ist auch nach längerer Zeit, bei erneuter Verwendung vom Anwender festgelegter Anlagen- und Maschinenparameter, durch den Vergleich der aufgezeichneten Standards, die reproduzierbare Erzeugung von Spritzschichten vergleichbarer Qualität möglich. Zudem ist neben der langfristigen Qualitätssicherung der thermischen Spritzschichten durch die Bewertung von qualitätsprägenden Merkmalen bzw. von Parametern und/oder Größen des Spritzprozesses und/oder der relativen Verhältnisse derselben mittels der erfindungsgemäß ausgestalteten Diagnostik, die gezielte online Regelung des Spritzprozesses gewährleistet, wodurch auch kurzfristig im Prozess auftretende Schwankungen der Einflussparameter (beispielsweise Pulverförderrate) durch die zeitaufgelöste Erfassung festgelegter Standardmerkmale (beispielsweise Sollwerte der charakteristischen Energieträger- und/oder Spritzzusatz-Linienintensitäten) bereits während des Spritzvorganges eliminiert werden können, was wiederum zu einer hohen Reproduzierbarkeit und gleichbleibenden Qualität von in kurzem Zeitabstand wiederholt vorgenommenen Beschichtungen mehrerer gleichartiger Bauteile einerseits und/oder der über einen längeren Zeit vorgenommen Beschichtungen größerer Bauteile andererseits führt.

Hierbei ist außerordentlich wichtig, das eine ungewollte Beeinträchtigung und/oder Wechselwirkung der erfindungsgemäß ausgestalteten Diagnostik mit dem thermischen Spritzprozesses oder der erzeugten Spritzschicht durch die Erfassung, Kontrolle und/oder Überwachung der Qualitätsmerkmale aufgrund der zerstörungsfreien und berührungslosen, optischen Erfassung vollständig ausgeschlossen ist.

Als optische Spektroskopie-Anordnungen können sowohl digitale wie auch analog arbeitende Spektroskopie-Anordnungen eingesetzt werden. Dabei ist es für die Funktionalität unerheblich ob die zu verwendenden Spektroskopie-Anordnung, in der Regel bestehend zumindest aus dem Spektralapparat zur spektralen Zerlegung der Emission, einem Wandler zur Erzeugung eines der Spektralintensität proportionalen analogen elektrischen Signals und einem Wandler zur Generierung eines wiederum proportionalen digitalen Signals, räumlich getrennt als Einzelbaugruppen oder auch vollständig integriert beispielsweise als PC-Steckkartenspektrometer mit integriertem Analog-Digital-Wandler ausgeführt ist. Es können einerseits ortsaufgelöste Messungen wie auch zeitaufgelöste Messungen der Spektrallinienintensität und/oder Gesamtintensitätsintegrale die geforderte Erfassung, Kontrolle, Überwachung und/oder Regelung gewährleisten. Zur Zeit ist beispielsweise als eine übliche technisch-wirtschaftliche Untergrenze zur zeitaufgelösten Erfassung der Parameter ein minimales Zeitfenster von einer Millisekunde anzusehen, da aufgrund der derzeit verwendeten internen, automatisiert betriebenen Spritzanlagensteuerungssysteme und deren Arbeits- und Programm-Taktzyklen eine schneller Umsetzung der Regelsignale nicht anwendbar ist.

Mit Vorteil kann die Erfassung, Kontrolle, Überwachung und/oder Regelung mit der optischen Spektroskopie-Anordnung zur Regelung und gegebenenfalls zur Optimierung eines oder mehrerer Parameter verwendet werden. Die Digitaltechnik ermöglicht es problemlos, daß die erfindungsgemäß zur Erfassung, Kontrolle, Überwachung und/oder Regelung der Qualität der Spritzschicht dienenden Aufzeichnungen unmittelbar im laufenden Spritzprozess sichtbar gemacht und/oder ausgewertet werden und so online eine optimierende Regelung von Spritzparametern stattfinden kann. Die Optimierung der Parameter trägt einerseits zur Wirtschaftlichkeit des thermischen Spritzprozesses bei, da ein uneffektiv hoher Verbrauch eines oder mehrerer im thermischen Spritzverfahren benötigter Stoffe (beispielsweise Gase, Spritzzusätze, Energieträger, etc.) vermieden werden. Andererseits ist eine erhöhte Arbeits- und Prozesssicherheit gewährleistet, da eine frühzeitige und schnelle Erkennung der Einbringung von Fremdstoffen (beispielsweise Verunreinigungen des Spritzzusatzes) oder Verwendung von nicht den Qualitätsanforderung entsprechenden Stoffen (beispielsweise Gase ungenügender Qualität) bereits zu Beginn und während des Spritzprozess ermöglicht wird.

Im Rahmen der Erfindung kann die mögliche Vielfalt an Auswertungs- und Darstellungsmöglichkeiten, welche die Digitaltechnik eröffnet, ausgenutzt werden. Je nach Einzelfall können dabei beispielweise auch rechnerisch überarbeitete Rohdaten der aufgezeichneten Spektren bestimmte Vorteile mit sich bringen. Hierzu können unter Umständen mathematische Auswertungsalgorithmen wie beispielsweise die Integralbildung, Differentialbildung und/oder Verhältnisbildung einer oder mehrerer aufgezeichneten Linienintensitäten und/oder der Verhältnisbildung einer oder mehrerer Gesamtintensitätsintegrale zur Anwendung kommen. Durch Verwendung der Digitaltechnik ist es darüber hinaus möglich, dem jeweiligen Anwendungsfall angepasste unterschiedliche - beispielsweise auch rechnerisch verfremdete oder überarbeitete - Darstellungsvarianten zu wählen. Grundsätzlich kann die Darstellung dabei als zeitlicher Verlauf einer oder mehrerer für den Spritzprozess relevanter Parameter oder abgeleiteter Größen erfolgen. Neben der normalen zeitaufgelösten Darstellung können beispielsweise auch Höhenlinien-Darstellungen, Polarkoordinaten-Darstellungen und/oder Darstellungen als Amplitude- oder Frequenzspektren nach Anwendung der Fourier-Transformation oder auch Mischformen daraus zum Einsatz kommen.

In Weiterbildung der Erfindung können die mit Hilfe der optischen Spektroskopie-Anordnung angefertigten Daten und Aufzeichnungen zur Dokumentation eines oder mehrerer die Qualität der Spritzschicht beeinflussenden Merkmale und/oder des Spritzprozesses an sich verwendet werden. Vorteilhafte Weiterbildungen der Erfindung beinhalten alle durch die Analog- und Digitaltechnik zur Verfügung gestellten Möglichkeiten durch geeignete elektrische, datentechnische und optischen Verbindungen sowie Schnittstellen eine direkte und online Kommunikation und Datenaustausch zwischen der Erfindung und externen Geräten/Systemen herzustellen. Dabei ist von Vorteil, daß die Aufzeichnung und Archivierung der relevanten Merkmale online in einem internen permanenten Datenspeicher oder auch in einem externen Datenmanagementsystem erfolgen kann. Eine weitere vorteilhafte Weiterbildung besteht darin, daß auf einfache Weise aus den ermittelten Merkmalen Grenzwertmeldungen in analoger oder digitaler Form erzeugt werden können, welche an die Spritzanlagensteuerung unmittelbar während des Spritzprozesses zur Weiterverarbeitung übergeben werden können. Durch geeignete Weiterbildung der Erfindung ist auch gewährleistet, daß unter Verwendung ein oder mehrerer Aufzeichnungskanäle und Spektroskopieanordnungen eine zeit- und/oder ortsaufgelöste Erfassung unterschiedlicher Spritzstrahlbereiche und/oder mehrerer Spritzstrahlen aus unterschiedlichen Spritzanlagen gleichzeitig erfolgen kann. Die Erfindung, welche vorzugsweise die Erfassung und spektrale Zerlegung der im Spritzstrahl auftretendenden Emission im sichtbaren Bereich (vorzugsweise 350 nm - 850 nm), durchführt, kann je nach Anwendungsfall auf einfache Weise mit Vorteil derart weitergebildet werden, daß die Erfassung von spektralen Intensitäten im ultravioletten Spektralbereich (vorzugsweise 200 nm - 350 nm) und/oder im infraroten Spektralbereich (vorzugsweise 850 nm - 8 µm) zur Erfassung, Kontrolle, Überwachung und/oder Regelung der Spritzparameter möglich ist. In einer anderen vorteilhaften Ausführungsform kann die Erfindung ohne Einschränkung der Funktionalität als PC-Standschrank, tragbares kompaktes Gerät oder auch als Einschub in 19"-Technik für bereits bestehende Anlagen und Systeme realisiert werden.

Im folgenden wird eine vorteilhafte Ausführungsform der Erfindung anhand der beigefügten Zeichnungen beispielhaft beschrieben. Gleiche oder ähnliche Teile in den Figuren werden dabei mit gleichen Bezugszeichen bezeichnet. Darin zeigen:
- Fig. 1: eine schematische Darstellung einer Ausführungsform einer geregelten Spritzanlage mit integrierter Spektroskopie-Anordnung;
- Fig. 2: ein schematisches Ablaufschema für die Erfassung, Kontrolle, Überwachung und/oder Regelung der Spritzparameter in der Spektroskopie-Anordnung gemäß Figur 2;
- Fig. 3: ein schematisches Ablaufschema der Software für die Spektroskopie-Anordnung in der Vorrichtung nach Figur 2;
- Fig. 4: Zeitlicher Verlauf der Spektrallinienintensitäten in Abhängigkeit von kurzfristigen Schwankungen der Spritzparameter beim Plasmaspritzen;
- Fig. 5: Zeitlicher Verlauf der Intensitätsintegrale einzelner Spektrallinien und des Gesamtintensitätsintegrals in Abhängigkeit von langfristigen Verschleißerscheinungen einer Plasmaspritzanlage;
- Fig. 6: eine schematische Darstellung einer Spritzanlage gemäß EN 1395 mit interner Regelung des Parameters n und Sollwertvorgabe S1ₙ.

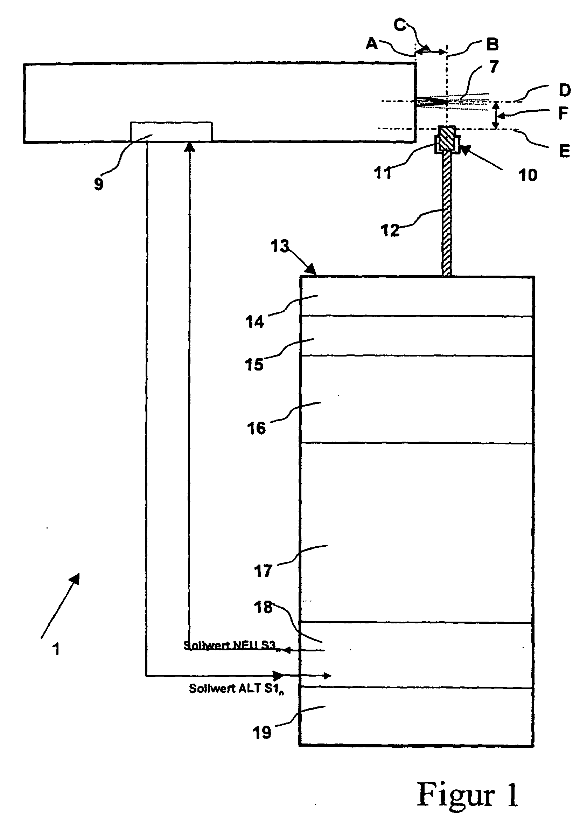

Figur 1 zeigt eine vorteilhafte Ausführungsform einer geregelten Spritzvorrichtung 1. Die Spritzvorrichtung 1 weist Einrichtungen zur Erfassung, Überwachung, Kontrolle und Regelung mit Hilfe einer optischen Spektroskopie-Anordnung 13 auf. Hierbei ist gewährleistet, daß die Spritzparameter, die in einem Toleranzbereich von besser als ± 1 % des vorgegebenen Sollwertes liegen, kurzfristig und auch langfristig konstant gehalten werden. Der Spritzstrahl 7 tritt aus der nicht dargestellten Spritzdüse der Spritzvorrichtung 1 aus und es erfolgt über einen optischen Sensor 10, welcher eine geeignete Kollimationsoptik 11 mit integrierter Schutzgasspülung aufweist, die Erfassung des vom Spritzstrahl 7 emittierten Spektrums. Der optische Sensor 10 wird dabei in einem lateralen Abstand C, bezogen auf die Austrittsebene A des Spritzstrahls und der hierzu parallelen Ebene B, die durch die Spitze des Gasanteils des Spritzstrahls 7 definiert ist, positioniert. Typischerweise ist hierbei ein Abstand C von 10 mm -100 mm zu wählen. Die vertikale bzw. radiale Position des optischen Sensors 10 ist im Abstand F, bezogen auf die Mittellinie D des austretenden Spritzstrahls 7 und der Oberkante E des optischen Sensors 7 zu wählen. Der Abstand F beträgt typischerweise 20 mm - 200 mm. Bei einer derart gewählten Position des optischen Sensors 10 ist es möglich, die Emission des Gasanteils wie auch die Emission des Partikelanteils im Spritzstrahl 7 zu erfassen. Die Emission des Spritzstrahls 7 wird über durch die im optischen Sensor 10 integrierte Kollimationsoptik 11 in ein Glasfaserkabel 12 fokussiert. Das Glasfaserkabel 12 überträgt nachfolgend die Emission an die optische Spektroskopie-Anordnung 13, wobei die Schnittstelle für die Übertragung ein in die Spektroskopie-Anordnung 13 integriertes Spektrometer-Modul 14 ist. Als weitere Komponenten enthält die Spektroskopie-Anordnung 13 die folgenden Komponenten: ein ADC-Modul 15, ein Messwerterfassungs- und Auswertemodul 16, ein Regelungs- und Stellmodul 17, ein Schnittstellen-Modul 18 sowie ein Datenbank-Modul 19. Über das in die Spektroskopie-Anordnung 13 integrierte Schnittstellen-Modul 18 erfolgt die Einspeisung der Sollwerte für die Spritzparameter, welche durch das in der Spritzanlagensteuerung 2 integrierte Sollwert-Vorgabemodul 9 bereitgestellt werden. Über das Schnittstellen-Modul 18 der Spektroskopie-Anordnung 13 erfolgt, abhängig vom Ergebnis und Entscheidung des Regelungs- und Stellmoduls 17, entweder die Rückführung der Sollwerte S1 ₁, S 1 ₂, ...., S1 ₙ (mit n = 1,2, ... Parameterindex) oder die Übergabe der im Regelungs- und Stellmodul 17 der Spektroskopie-Anordnung 13 neu gebildeten Sollwerte S2₁, S2₂, ...., S2ₙ (mit n = 1,2, ... Parameterindex) als neue Sollwerte S3 ₁, S3 ₂, ...., S3ₙ (mit n = 1,2, ... Parameterindex) an die Spritzanlage 1. Dabei ist in diesem Ausführungsbeispiel die Übergabe der Sollwerte an das in die Spritzanlagensteuerung 2 integrierte Sollwert-Vorgabemodul 9 vorgesehen. Selbstverständlich kann die Übergabe der Sollwerte aus dem Schnittstellen-Modul 18 auch direkt an die Regel-Einheiten 4 der Spritzanlage 1 erfolgen. In beiden Fällen ist eine effiziente, online Änderung und Regelung der Spritzparameter und die effiziente Qualitätssicherung der Spritzschicht gewährleistet.

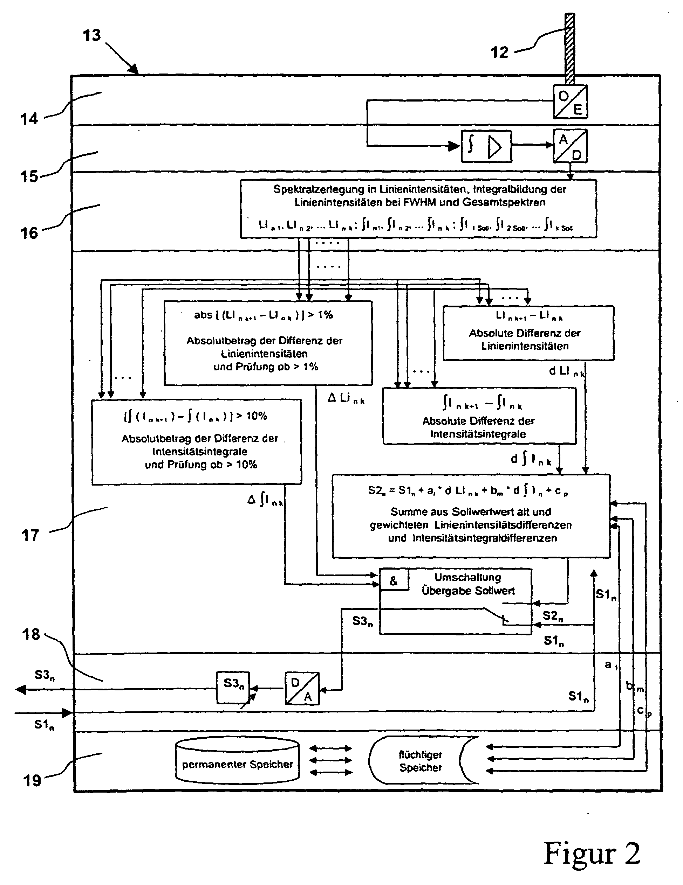

Figur 2 beschreibt den Ablauf für die Erfassung, Kontrolle, Überwachung und Regelung der Spritzparameter innerhalb der in Figur 1 schematisch dargestellten Spektroskopie-Anordnung 13. Die Emission des Spritzstrahls 7 wir über den optischen Sensor 10 und das Glasfaserkabel 12 direkt in das Spektrometer des Spektrometer-Moduls 14 geführt. Im Spektrometer-Modul 14 erfolgt die Umwandlung des optischen Signals in ein proportionales elektrisches Signal. Dieses Signal tritt in das ADC-Modul 15 ein, welches die Verstärkung und Umwandlung des analoges Signals in ein proportionales digitales Signal bewerkstelligt und damit zur digitalen Signalverarbeitung im Messwerterfassungs- und Auswertemodul 16 zur Verfügung steht.

Im Messwerterfassungs- und Auswertemodul 16 erfolgt die zeitaufgelöste Zerlegung der aufgezeichneten Emissionsspektren und die Ermittlung von im vorliegenden Ausführungsbeispiel vier für den Prozessverlauf charakteristischen Linienintensitäten (vorzugsweise je zwei Gas- und Pulverlinien), die Berechnung der zugehörigen integralen Linienintensitäten und das Gesamtintegral des Spektrums. Die einzelnen Intensitäten der Linien sind im folgenden mit LI ₙ₁, LIₙ₂, ....., LI ₙₖ (mit n = 1,2, ... Parameterindex und mit k = 1,2, ... Zeitindex) bezeichnet. Die zugehörigen Integrale der Linien werden ermittelt aus dem numerischen Integral der Linienintensität auf Basis der vollen Halbwertsbreite der gegebenen Linie und sind im folgenden mit Integrale der Spektren ∫I _{n 1}, ∫I _{n 2},... ∫I _{n k} (mit n = 1,2, ... Parameterindex und mit k = 1,2, ... Zeitindex) gekennzeichnet. Entsprechend wird für die Integrale des Gesamtspektrums die Bezeichnung ∫I ₁, ∫I ₂, ... ∫Iₖ (mit k = 1,2, ... Zeitindex) verwendet. Bei erfolgreicher Inbetriebnahme und Abnahme der Spritzanlage gemäß EN 1397 wird ein Referenzparameter-Datensatz [(LI_{1 Soll}, LI_{2 Soll}, ....., LI_{n Soll}); (∫I_{1 Soll} , ∫I _{2 Soll} , ... ∫I _{n Soll}); (∫I ₛₒₗₗ )] für die jeweilige Anwendung im Datenbank-Modul 19 der Spektroskopie-Anordnung abgelegt. Zudem erfolgt im Betrieb der Spritzanlage 1 bei der Zuführung eines neuen zu beschichtenden Bauteils die Archivierung des Integrals des Gesamtspektrums ∫I _{n 1st} entsprechenden . Durch sukzessiven Vergleich und Verfolgung der Veränderung des aktuellen Wertes ∫Iₙ mit dem Wert ∫I ₛₒₗₗ kann der langfristige Zustand der Spritzanlage 1, beispielsweise der Düsenverschleiß durch den Lichtbogen bei Plasmaspritzen, überwacht und geregelt werden. Angestrebt ist neben der langfristigen Überwachung und Regelung die Eliminierung von kurzfristigen Abweichungen der Spritzparameter.

Im folgenden wird die prinzipielle Vorgehensweise zur kurzzeitigen Entscheidungsfindung, ob lediglich der vom Sollwert-Vorgabemodul 9 der Spritzanlagensteuerung 2 bereitgestellte Sollwert S1ₙ zurückgegeben oder ein neu ermittelter Sollwert S2ₙ an die Spritzanlagensteuerung 2 übergeben werden muß, beschrieben. Hierzu werden in einem zeitlichen Abstand von unter 1 Sekunde die absoluten Differenzen der Linienintensitäten (d LI _{n k}) sowie die absoluten Differenzen der Linienintensitätsintegrale (d ∫I _{n k}) gebildet. Die nachfolgende Berechnung der zeitabhängigen internen Sollwerte S2ₙ erfolgt unter Zuhilfenahme der Linienintensitätsdifferenzen d LI _{n k} , der Linienintegraldifferenzen d ∫I _{n k} sowie der durch das Datenbankmodul 19 bereitgestellte Korrekturglieder a , , b ₘ , c ₚ nach der mathematischen Formel S2 ₙ = S1 ₙ + a₁ * dLI _{n k} +bₘ * d∫I _{n k}+ cₚ. Die Korrekturglieder wurden dabei zuvor empirisch ermittelt und stehen dem System durch einmalige Übertragung aus dem permanenten in den flüchtigen Speicher des Datenbank-Moduls 19 zur Verfügung.

Parallel zur Ermittlung der oben beschriebenen Differenzen d LI ₙₖ und d ∫I ₙₖ werden die Absolutbeträge der Differenzen aus den zeitlich veränderlichen Linienintensitäten (Δ LI ₙₖ = abs [LI ₙₖ₊₁ - LI ₙₖ]) gebildet. Nachfolgend erfolgt eine Prüfung ob diese Beträge Δ LI ₙₖ mehr als 1% bezogen auf den jeweilig zeitlich vorangegangenen Wert abweichen. Falls eine entsprechende Abweichung auftritt, wird eine entsprechend zugeordnete boolesche Variable d LI ₙ auf 1 gesetzt. Andernfalls behält sie den Wert 0. Parallel erfolgt die Berechnung der Absolutbeträge der Differenzen aus den zeitlich veränderlichen Intensitätsintegralen (d ∫I _{n k} == abs [∫I ₖ₊₁ - ∫I ₖ ]). Nachgeschaltet erfolgt die Prüfung ob diese Beträged ∫I _{n k} mehr als 10 % bezogen auf den jeweilig zeitlich vorangegangenen Wert abweichen. Falls eine entsprechende Abweichung auftritt, wird eine entsprechend zugeordnete boolesche Variable Δ ∫I ₙₖ auf 1 gesetzt, ansonsten behält sie den Wert 0.

Abschließend erfolgt zeitaufgelöst in einer weiteren logischen Operation eine "UND"-Verknüpfung der beiden booleschen Variablen Δ ∫I _{n k} und Δ LI ₙₖ. Bei einer resultierenden logischen "1" (= wahr/true) wird der intern neu berechnete Sollwert S2ₙ als neuer Sollwert S3ₙ an das Schnittstellen-Modul 18 übergeben. Bei einer logischen "0" (= nicht wahr/false) erfolgt einen Übergabe des alten Sollwertes S1ₙ , welcher vom Vorgabe-Modul 9 der Spritzanlagensteuerung 7 zur Verfügung gestellt wird, an das Schnittstellen-Modul 18. Vom Schnittstellen-Modul 18 erfolgt schließlich die Übergabe des Sollwertes S3ₙ an das Vorgabe-Modul 9 der Spritzanlagensteuerung 7 oder direkt an die Regeleinheiten 4 der Spritzanlage 1.

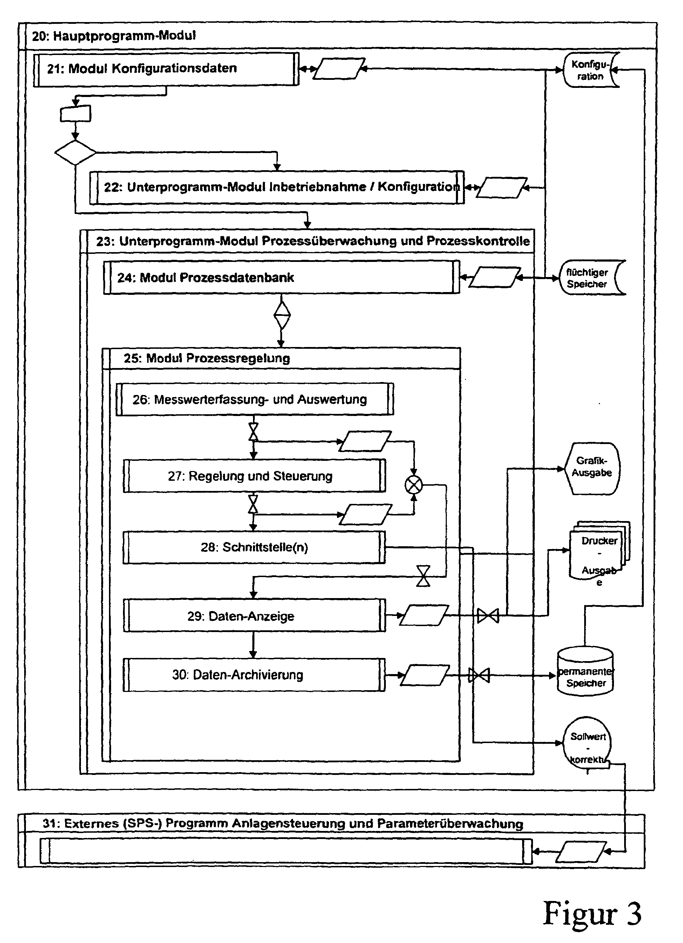

In der Figur 3 ist das oben beschriebene Verfahren zum Erfassen, Auswerten und Berechnen der neuen Sollwerte S3ₙ zum Regeln einer erfindungsgemäßen Spritzvorrichtung in Form eines Ablaufschemas wiedergegeben. Das Hauptprogramm-Modul 20 stellt eine automatisierte Abarbeitung der unten beschriebenen Funktionen und Module bereit. Innerhalb des Hauptprogramm-Moduls 20 erfolgt zuerst das Laden der Konfigurationsdaten durch das Modul 21 "Konfigurationsdaten laden", welche dem System die Grundkonfiguration der vorhandenen Hardware mitteilt, in den flüchtigen Speicher, welcher durch den permanenten Speicher im Datenbank-Modul 19 zur Verfügung gestellt wird. Nachfolgende Module arbeiten automatisiert, können jedoch durch einen manuelle Eingabe vom Benutzer definiert unterbrochen werden. Hierzu zählt insbesondere das Unterprogramm-Modul 22 "Inbetriebnahme / Konfiguration", welches zur Neukonfiguration, Ein-/Ausgabetests und zur Abnahme der Spektroskopie-Anordnung 13 dient. In das Unterprogramm-Modul 23 "Prozessüberwachung und Prozesskontrolle" sind das Modul 24 "Prozessdatenbank laden" zur automatischen Erkennung von anwendungsspezifischen, unterschiedlichen Spritzzusätzen sowie das Modul 25 "Prozessregelung" zur automatisierten Messwerterfassung, Messwertverarbeitung, Berechnung der Stell- und Regelungssignale, Visualisierung der Daten sowie der Datenarchivierung implementiert. Innerhalb des Unterprogramm-Moduls 25 "Prozessüberwachung und Prozessregelung" übernimmt die Funktion 26 "Messwerterfassung und Auswertung" die bereits zuvor beschriebene zeitaufgelöste Zerlegung der aufgezeichneten Emissionsspektren, die Ermittelung von vier für den Prozessverlauf charakteristischen Linienintensitäten, die Berechnung der zugehörigen integralen Linienintensitäten sowie des Gesamtintegrals des Spektrums. Die Funktion 27 "Regelung und Steuerung" übernimmt die bereits beschriebene numerische Aufgabe der zeitabhängigen Berechnung der absoluten Differenzen der Linienintensitäten und Linienintensitätsintegrale als auch der zugehörigen prozentualen Abweichungen zum Vorgängerwert im Register verbunden mit der Generierung der entsprechenden booleschen Variablen für die Entscheidung der Übergabe des entsprechenden Sollwerte. Zudem erfolgt hier die Berechnung der internen neuen Sollwertvorgaben und die Übergabe an die Funktion 28 "Schnittstelle". Letztere Funktion 28 gewährleistet die Übergabe der neuen Sollwerte an eine analoge oder digitale Schnittstelle zur Sollwertkorrektur an ein extern ablaufendes (SPS-)Programm 31 innerhalb der Spritzanlagensteuerung 2 sowie die Übergabe der zeitaufgelöst erfassten und berechneten Daten an die Funktion 29 "Daten-Anzeige" und die Funktion 30 "Daten-Archivierung". Zusätzliche Ein/Ausgabe-Einheiten gestatten die Ausgabe dieser Daten und Qualitätsaufzeichnungen am Bildschirm und/oder Drucker.

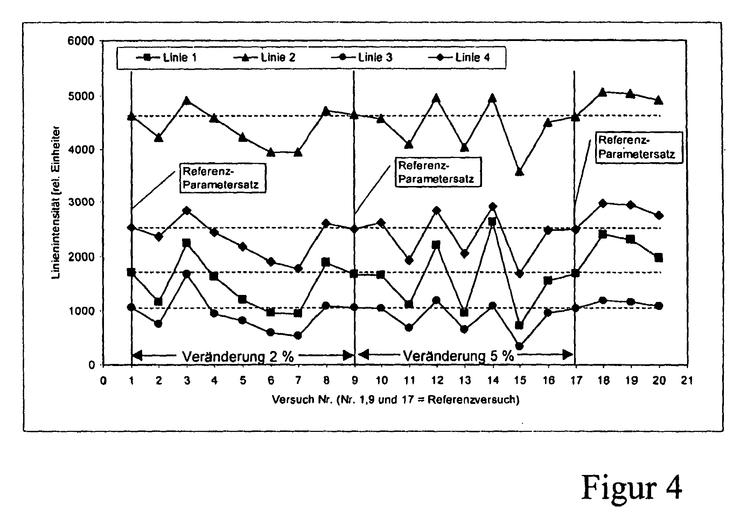

Figur 4 zeigt den zeitlichen Intensitätsverlauf von vier charakteristischen Spektrallinien (je zwei für das Spritzpulver und je zwei für Gase) in Abhängigkeit von kurzfristigen Schwankungen der Spritzparameter beim Plasmaspritzen von Wolframkarbid-Kobalt (WC/Co). Angestrebt wird hierbei, daß durch optimierte Wahl der Stromstärke, Pulverförderrate, Plasmagasmengen (Argon, Wasserstoff) und Positionierung des Pulverinjektors das Spritzpulver im heißen Gasstrahl eine derartige Flugbahn beschreibt, daß das Spritzpulver in an- bzw. aufgeschmolzenem Zustand auf das Bauteil gebracht wird. Dabei ist jedoch zu vermeiden, daß durch zu hohe Temperaturen ein Zersetzung des Karbides (WC) eintritt. Figur 4 veranschaulicht die schnelle und effiziente Erfassung und Regelung anhand der Auswertung der Linienintensitäten. Die mit 1, 9 und 17 in der Figur 4 gekennzeichneten Versuche geben die Reproduzierung der Soll-Referenz-Einstellungen wieder. In den Versuchen 2 - 8 erfolgte die definierte Änderung der relevanten Spritzparameter um ± 2 % gegenüber dem Sollwert, in den Versuchen 10 - 16 erfolgte eine definierte Änderung um ± 5 %. Figur 4 veranschaulicht auf eindrucksvolle Weise, daß es möglich ist, insbesondere kurzfristige Schwankungen der relevanten Spritzparameter, welche gemäß EN 1397 noch zugelassen werden, reproduzierbar zu erfassen und online auf die Soll-Parameter zu regeln.

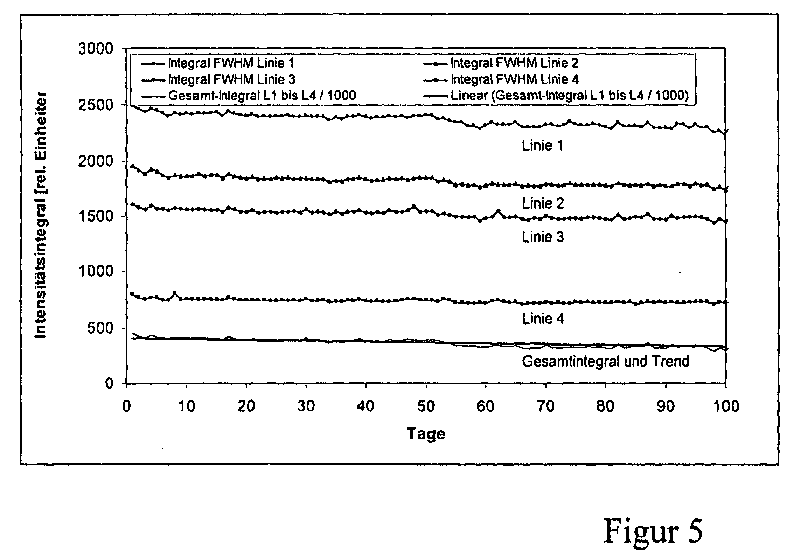

In der Figur 5 ist der langfristige zeitliche Verlauf der Intensitätsintegrale einzelner ausgewählter Spektrallinien, des Integrals des Gesamtspektrums sowie die zugehörige lineare Trendlinie beim Plasmaspritzen von WC/Co dargestellt. Beim Plasmaspritzen ist es von besonderer Bedeutung, daß eine negative Beeinflussung der Qualität der Spritzschicht durch den Verschleiß der Spritzdüse frühzeitig erkannt wird. Es kommt hier aufgrund der hohen Stromstärken im Lichtbogen zu Abbranderscheinungen und Veränderungen des Elektrodenabstandes. Spritzanlagen, welche gemäß EN 1397 ausgeführt sind, verfügen nur in begrenztem Masse über Nachregelmöglichkeiten des Stroms zum Ausgleich des Verschleißes, wobei jedoch keine online Aussage über die Qualität der Spritzschicht getroffen werden kann. Angestrebt wird jedoch, daß die volle Lebensdauer der Düsen und Elektrodeneinsätze ausgenutzt werden kann bei gleichbleibend hoher und reproduzierbarer Qualität der Spritzschicht. Insbesondere die integralen Intensitäten charakteristische Spektrallinien sowie das Integral des Gesamtspektrums liefern quantitative Aussagen zum Zustand der Spritzdüse und Entscheidungskriterien für den Zeitpunkt des Düsen- und Elektrodenwechsels. Die in der Figur 5 gezeigten integralen Werte über einen längeren Referenzzeitraum machen deutlich, daß durch den langfristige Vergleich der aufgezeichneten Integrale und der entsprechenden Nachregelung mehrerer Spritzparameter unabhängig voneinander einerseits die maximale Lebensdauer der Düse genutzt und andererseits das Ende der Lebensdauer vorhergesehen werden kann bei gleichbleibend hoher Qualität der erzeugten Spritzschichten. Dies bringt zudem eine signifikante Erhöhung der Leistungsfähigkeit des Plasmaspritzverfahrens und der Leistungsfähigkeit der Plasmaspritzanlage mit sich.

### Bezugszeichenliste:

- 1: Spritzanlage
- 2: Spritzanlagensteuerung
- 3: Vorrat an Energieträgern, Spritzzusätzen und Gasen
- 4: Regeleinheiten 1 ... n mit Messung und Dosierung des Parameters 1...n
- 5: Spritzpistole
- 6: Spritzdüse
- 7: Spritzstrahl
- 8: Zuführungen für Energieträger, Spritzzusätze und Gase
- 9: Vorgabe-Modul für Sollwertvorgabe S1 ₁, S1 ₂, ..., S1 ₙ für Parameter 1, 2 ... n mit n = 1,2, ... (Parameterindex)
- 10: Sensor
- 11: Optische Kollimationseinheit
- 12: Glasfaserkabel
- 13: Spektroskopieanordnung
- 14: Spektrometer-Modul
- 15: ADC-Modul
- 16: Messwerterfassungs- und Auswertemodul
- 17: Regelungs- und Stellmodul
- 18: Schnittstellen-Modul
- 19: Datenbank-Modul
- 20: Hauptprogramm
- 21: Modul Konfigurationsdaten
- 22: Unterprogramm-Modul Inbetriebnahme/Konfiguration
- 23: Unterprogramm-Modul Prozessüberwachung und Prozesskontrolle
- 24: Modul Prozessdatenbank
- 25: Modul Prozessregelung
- 26: Funktion Messwerterfassung und Auswertung
- 27: Funktion Regelung und Steuerung
- 28: Funktion Schnittstelle
- 29: Funktion Daten-Anzeige
- 30: Funktion Daten-Archivierung
- 31: Externes SPS-(Programm) Anlagensteuerung / Parameterüberwachung

## Patentansprüche

1. Vorrichtung zum thermischen Spritzen (1) zum Erzeugen einer Beschichtung auf einer Oberfläche eines Substrates, wobei die Vorrichtung (1) einen Energieträgervorrat (3), Einrichtungen zum Zuführen von Beschichtungsmaterial und zum Zuführen von Gas (8), eine Steuereinheit (2), eine Regeleinheit (4), ein Spritzaggregat (5) mit Spritzdüse (6) zum Erzeugen eines Spritzstrahls (7) und eine optische Sensoreinrichtung (10) zum Erfassen zumindest eines die Qualität der Beschichtung beeinflussenden Parameters aufweist,
**dadurch gekennzeichnet, dass**
eine optische Spektroskopieeinheit (13) zur Erfassung von Änderungen der Partikeleigenschaften im Spritzstrahl vorgesehen ist, die an ihrem Eingang mit der optischen Sensoreinrichtung (10) und an ihrem Ausgang mit der Regeleinheit (4) verbunden ist.

2. Vorrichtung nach Patentanspruch 1,
**dadurch gekennzeichnet, dass**
die Spektroskopieeinheit (13) zur Erfassung unterschiedlicher Spritzstrahlbereiche und/oder mehrerer Spritzstrahlen aus unterschiedlichen Spritzanlagen gleichzeitig zeit- und/oder ortsaufgelöst unter Verwendung eines oder mehrerer Aufzeichnungskanäle vorgesehen ist.

3. Vorrichtung nach Patentanspruch 1 oder 2,
**dadurch gekennzeichnet, dass**
die Spektroskopieneinheit (13) zur Erfassung und spektralen Zerlegung der im Spritzstrahl auftretenden Emission im sichtbaren Bereich, vorzugsweise im Bereich zwischen 350 nm bis 850 nm vorgesehen ist.

4. Vorrichtung nach Patentanspruch 1 oder 2,
**dadurch gekennzeichnet, dass**
die Spektroskopieeinheit (13) zur Erfassung und spektralen Zerlegung der im Spritzstrahl auftretenden Emission im ultravioletten Spektralbereich, vorzugsweise im Bereich zwischen 200 nm bis 350 nm, oder im infraroten Spektralbereich, vorzugsweise im Bereich von 850 nm bis 8 µm vorgesehen ist.

5. Vorrichtung nach einem der vorstehenden Patentansprüche,
**dadurch gekennzeichnet, dass**
die Spektroskopieeinheit (13) als digitale oder analoge Einheit ausgebildet ist.

6. Vorrichtung nach einem der Patentansprüche 1 bis 4,
**dadurch gekennzeichnet, dass**
die Spektroskopieeinheit (13) einen Spektralapparat zur Spektralanalyse der Emission des Spritzstrahls (7) aufweist.

7. Vorrichtung nach einem der vorstehenden Patentansprüche, **dadurch gekennzeichnet, dass** ein Wandler zur Erzeugung eines der Spektralintensität proportionalen analogen elektrischen Signals und ein weiterer Wandler zum Erzeugen eines hierzu proportionalen digitalen Signals vorgesehen ist.

8. Vorrichtung nach einem der vorstehenden Patentansprüche,
**dadurch gekennzeichnet, dass**
die Regeleinheit (4) zum Regeln des Spritzvorgangs anhand eines Ist- und Sollwertvergleichs auf Basis der Signale der Spektroskopieeinheit und gespeicherter Sollwertdaten eines oder mehrerer die Qualität der Beschichtung beeinflussenden Parameter vorgesehen ist.

9. Vorrichtung nach einem der vorstehenden Patentansprüche,
**dadurch gekennzeichnet, dass**
Einrichtungen zum Veränderung von Spritzparametern vorgesehen sind, die von der Regeleinheit (4) ansteuerbar sind.

10. Verfahren zum thermischen Spritzen, mit dem eine Beschichtung auf einer Oberfläche eines Substrates erzeugt wird, wobei das Verfahren folgende Schritte aufweist:
Aufspritzen eines Zusatzwerkstoffes unter Einsatz eines Gases auf die zu beschichtende Oberfläche des Substrates;
Erfassen der Emission des Spritzstrahls mittels eines optischen Sensors (10):
Spektralanalyse der von dem optischen Sensor erfassten Emissionsmessung in einer Spektroskopieeinheit;
Ermitteln zumindest eines die Qualität der Beschichtung beeinflussenden Parameters anhand des Ergebnisses der Spektralanalyse;
Vergleich der Ist- mit den Sollwerten;
Regeln der Spritzparameter.

11. Verfahren nach Patentanspruch 10, wobei in einem weiteren Verfahrensschritt die rechnerische Überarbeitung der Rohdaten durch mathematische Auswertungs-Algorithmen erfolgt.

12. Verfahren nach Patentanspruch 10, wobei in einem weiteren Verfahrensschritt die Erfassung unterschiedlicher Spritzstrahlbereiche und/oder mehrerer Spritzstrahlen aus unterschiedlichen Spritzanlagen gleichzeitig zeit-und/oder ortsaufgelöst unter Verwendung eines oder mehrerer Aufzeichnungskanäle und Spektroskopieanordnungen erfolgt.

13. Verfahren nach Patentanspruch 10,
**dadurch gekennzeichnet dass,**
die Erfassung und spektrale Zerlegung der im Spritzstrahl auftretenden Emission im sichtbaren Bereich, vorzugsweise im Bereich zwischen 350 nm bis 850 nm erfolgt.

14. Verfahren nach Patentanspruch 10,
**dadurch gekennzeichnet dass,**
die Erfassung und spektrale Zerlegung der im Spritzstrahl auftretenden Emission im ultravioletten Spektralbereich, vorzugsweise im Bereich zwischen 200 nm bis 350 nm, oder im infraroten Spektralbereich, vorzugsweise im Bereich von 850 nm bis 8 µm erfolgt.

## Claims

1. An apparatus for thermal spraying (1) for producing a coating on a surface of a substrate, the apparatus (1) having an energy transfer medium supply (3), means for delivering coating material and for delivering gas (8), a control unit (2), a regulating unit (4), a spraying unit (5) having a spray nozzle (6) for producing a spray jet (7), and an optical sensor device (10) for sensing at least one parameter that influences the quality of the coating,
**characterised in that**
an optical spectroscopy unit (13) is provided for sensing changes in the properties of the particles in the spray jet, which spectroscopy unit (13) is connected at its input to the optical sensor device (10) and at its output to the regulating unit (4).

2. An apparatus according to patent claim 1,
**characterised in that**
the spectroscopy unit (13) is provided for sensing different spray jet regions and/or a plurality of spray jets from different spraying systems simultaneously, in a time-resolved and/or position-resolved manner, using one or more recording channels.

3. An apparatus according to patent claim 1 or 2,
**characterised in that**
the spectroscopy unit (13) is provided for the sensing and spectral analysis of the emission occurring in the spray jet in the visible range, preferably in the range from 350 nm to 850 nm.

4. An apparatus according to patent claim 1 or 2,
**characterised in that**
the spectroscopy unit (13) is provided for the sensing and spectral analysis of the emission occurring in the spray jet in the ultraviolet range of the spectrum, preferably in the range from 200 nm to 350 nm, or in the infrared range of the spectrum, preferably in the range from 850 nm to 8 µm.

5. An apparatus according to any one of the preceding patent claims,
**characterised in that**
the spectroscopy unit (13) is in the form of a digital or analogue unit.

6. An apparatus according to any one of patent claims 1 to 4,
**characterised in that**
the spectroscopy unit (13) has a spectroscopic apparatus for spectral analysis of the emission of the spray jet (7).

7. An apparatus according to any one of the preceding patent claims,
**characterised in that** a converter is provided to produce an analogue electrical signal proportional to the spectral intensity, and a further converter is provided to produce a digital signal proportional to the latter signal.

8. An apparatus according to any one of the preceding patent claims,
**characterised in that**
the regulating unit (4) is provided for regulating the spraying process by reference to a comparison of actual values and desired values on the basis of the signals of the spectroscopy unit and stored desired-value data of one or more parameters that influence the quality of the coating.

9. An apparatus according to any one of the preceding patent claims,
**characterised in that**
devices for altering spraying parameters are provided, which devices can be activated by the regulating unit (4).

10. A method for thermal spraying, with which a coating is produced on a surface of a substrate, the method comprising the following steps:
spraying of an additive material using a gas onto the surface of the substrate to be coated; sensing of the emission of the spray jet by means of an optical sensor (10);
spectral analysis of the emission measurement acquired by the optical sensor in a spectroscopy unit;
determination of at least one parameter that influences the quality of the coating, by reference to the outcome of the spectral analysis;
comparison of the actual values with the desired values;
regulation of the spraying parameters.

11. A method according to patent claim 10, wherein in a further step of the method the computational revision of the raw data is performed by mathematical evaluation algorithms.

12. A method according to patent claim 10, wherein in a further step of the method the sensing of different spray jet regions and/or of a plurality of spray jets from different spraying systems simultaneously is performed in a time-resolved and/or position-resolved manner using one or more recording channels and spectroscopy arrangements.

13. A method according to patent claim 10,
**characterised in that**
the sensing and spectral analysis of the emission occurring in the spray jet is carried out in the visible range, preferably in the range from 350 nm to 850 nm.

14. A method according to patent claim 10,
**characterised in that**
the sensing and spectral analysis of the emission occurring in the spray jet is carried out in the ultraviolet range of the spectrum, preferably in the range from 200 nm to 350 nm, or in the infrared range of the spectrum, preferably in the range from 850 nm to 8 µm.

## Revendications

1. Dispositif de pulvérisation (1) thermique pour générer un revêtement' sur une surface d'un substrat, le dispositif (1) présentant une réserve de source d'énergie (3), des appareils pour l'arrivée du matériau de revêtement et pour l'arrivée du gaz (8), une unité de commande (2), une unité de réglage (4), un ensemble de pulvérisation (5) avec buse de pulvérisation (6) pour générer un jet de pulvérisation (7) et un dispositif capteur (10) optique pour la détection d'au moins un paramètre influençant la qualité du revêtement, **caractérisé en ce qu'**une unité de spectroscopie (13) optique est prévue pour la détection de modifications des propriétés de particule dans le jet de pulvérisation qui est reliée sur son entrée au dispositif capteur (10) optique et sur sa sortie à l'unité de réglage (4).

2. Dispositif selon la revendication 1, **caractérisé en ce que** l'unité de spectroscopie (13) est prévue pour la détection de différentes zones de jet de pulvérisation et/ou de plusieurs jets de pulvérisation provenant de différentes installations de pulvérisation avec une résolution simultanée de temps et/ou de lieu en utilisant un ou plusieurs canaux d'enregistrement.

3. Dispositif selon la revendication 1 ou 2, **caractérisé en ce que** l'unité de spectroscopie (13) est prévue pour la détection et la dispersion spectrale de l'émission apparaissant dans le jet de pulvérisation dans la plage visible, de préférence dans la plage allant de 350 nm à 850 nm.

4. Dispositif selon la revendication 1 ou 2, **caractérisé en ce que** l'unité de spectroscopie (13) est prévue pour la détection et la dispersion spectrale de l'émission apparaissant dans le jet de pulvérisation dans la plage spectrale ultraviolette, de préférence dans la plage allant de 200 nm à 350 nm, ou dans la plage spectrale infrarouge, de préférence dans la plage allant de 850 nm à 8 µm.

5. Dispositif selon l'une quelconque des revendications précédentes, **caractérisé en ce que** l'unité de spectroscopie (13) est conçue comme une unité numérique ou analogique.

6. Dispositif selon l'une quelconque des revendications 1 à 4, **caractérisé en ce que** l'unité de spectroscopie (13) présente un appareil spectral pour l'analyse spectrale de l'émission du jet de pulvérisation (7).

7. Dispositif selon l'une quelconque des revendications précédentes, **caractérisé en ce qu'**un convertisseur est prévu pour générer un signal électrique analogique proportionnel à l'intensité spectrale et un autre convertisseur est prévu pour générer un signal numérique proportionnel à celui-ci.

8. Dispositif selon l'une quelconque des revendications précédentes, **caractérisé en ce que** l'unité de réglage (4) est prévue pour le réglage de l'opération de pulvérisation à l'aide d'une comparaison valeur réelle/valeur de consigne sur la base des signaux de l'unité de spectroscopie et de données de valeur de consigne mémorisées d'un ou de plusieurs paramètres influençant la qualité du revêtement.

9. Dispositif selon l'une quelconque des revendications précédentes, **caractérisé en ce que** des appareils pour la modification de paramètres de pulvérisation sont prévus, lesquels peuvent être activés par l'unité de réglage (4).

10. Procédé pour la pulvérisation thermique, avec lequel on génère un revêtement sur une surface d'un substrat, le procédé présentant les étapes suivantes :
pulvérisation d'un matériau supplémentaire avec utilisation d'un gaz sur la surface à revêtir du substrat ;
enregistrement de l'émission du jet de pulvérisation au moyen d'un capteur (10) optique : analyse spectrale de la mesure d'émission détectée par le capteur optique dans une unité de spectroscopie ;
détermination d'au moins un paramètre influençant la qualité du revêtement à l'aide du résultat de l'analyse spectrale ;
comparaison des valeurs réelles avec les valeurs de consigne ;
réglage des paramètres de pulvérisation.

11. Procédé selon la revendication 10, dans lequel la révision mathématique des données brutes s'effectue par des algorithmes d'analyse mathématiques dans une autre étape du procédé.

12. Procédé selon la revendication 10, dans lequel la détection de différentes zones de jet de pulvérisation et/ou de plusieurs jets de pulvérisation provenant de différentes installations de pulvérisation s'effectue dans une autre étape du procédé avec une résolution simultanée de temps et/ou de lieu avec l'utilisation d'un ou de plusieurs canaux d'enregistrement et dispositifs de spectroscopie.

13. Procédé selon la revendication 10, **caractérisé en ce que** la détection et la dispersion spectrale de l'émission apparaissant dans le jet de pulvérisation s'effectuent dans la plage visible, de préférence dans la plage allant de 350 nm à 850 nm.

14. Procédé selon la revendication 10, **caractérisé en ce que** la détection et la dispersion spectrale de l'émission apparaissant dans le jet de pulvérisation s'effectuent dans la plage spectrale ultraviolette, de préférence dans la plage allant de 200 nm à 350 nm, ou dans la plage spectrale infrarouge, de préférence dans la plage allant de 850 nm à 8 µm.
